# EUROPEAN PATENT SPECIFICATION

(11) **EP 2 704 563 B1**
(45) Date of publication and mention of the grant of the patent: **29.06.2016**
(21) Application number: 12717131.2
(22) Date of filing: 25.04.2012
(51) Int. Cl.: A01N 25/02, A01N 25/30, A01N 37/48, A01N 41/06, A01N 43/18, A01N 43/50, A01N 43/80, A01N 43/88, A01P 13/00

(54) **ADJUVANT COMPRISING DIMETHYLSULFOXIDE AND A PHOSPHATE ESTER**
ADJUVANS ENTHALTEND DIMETHYLSULFOXIDE UND EINEN PHOSPHATESTER
ADJUVANTS CONTENANT DU DIMÉTHYLSULFOXYDE ET UN ESTER DE PHOSPHATE

(30) Priority: 03.05.2011 US 201161481744 P; 03.05.2011 EP 11164529
(43) Date of publication of application: 12.03.2014
(73) Proprietor: BASF SE, 67056 Ludwigshafen am Rhein (DE)
(72) Inventor: SCHNABEL, Gerhard, 63820 Elsenfeld (DE); PFENNING, Matthias, 67365 Schwegenheim (DE)
(74) Representative: BASF IP Association
(86) International application number: PCT/EP2012/057579
(87) International publication number: WO 2012/150163

(56) References cited:
- EP-A1- 1 741 339
- WO-A2-2010/010958
- WO-A2-2010/040835
- DD-A1- 210 608
- DE-A1- 3 325 444
- US-A- 5 198 012
- "Aqueous herbicidal suspension based on 3-cyclohexyl-5,6-tri-methylene uracil - contains additional substituted polyethylene-glycol phosphate to increase activity", DERWENT, 10 January 1997 (1997-01-10), XP002371506, -& RU 2 071 256 C1 (NI T I GERBITSIDOV I REGULYATO [SU]) 10 January 1997 (1997-01-10)
- Basf: "Technical Bulletin Klearfac AA270 Phosphate Ester Surfactant", , 1 January 2004 (2004-01-01), pages 1-2, XP055005923, Retrieved from the Internet: URL:http://worldaccount.basf.com/wa/NAFTA/ Catalog/ChemicalsNAFTA/doc4/BASF/PRD/30085 577/.pdf?title=&asset_type=pi/pdf&language =EN&urn=urn:documentum:eCommerce_sol_EU:09 007bb28001f259.pdf [retrieved on 2011-08-31]
- Rhodia: "Rhodia presents its cost-effective and eco-friendly surfactant technologies at Cesio 2008", , 23 June 2008 (2008-06-23), XP055006057, Retrieved from the Internet: URL:http://www.rhodia.com/en/news_center/n ews_releases/surfactant_technologies_23060 8.tcm#_ [retrieved on 2011-09-01]
- "Surfactants Products List", , 28 October 2013 (2013-10-28), pages 1-16, XP55174110, Tokyo, Japan Retrieved from the Internet: URL:http://www.adk.co.jp/en/chemical/produ cts/surface/download/ADEKA_Surfactants-pro ductsList_1111.pdf [retrieved on 2015-03-05]

## Description

The present invention relates to an adjuvant for enhancing the activity of pesticides comprising a polar solvent and a phosphate ester of the formula (A) (as described hereinbelow), it being possible for the phosphate ester of the formula (A) to be present as the free acid and/or as a salt, and where the polar solvent is dimethyl sulfoxide (DMSO) or tetramethylene sulfone. The invention furthermore relates to an agrochemical composition comprising a pesticide and the adjuvant; to a process for the preparation of the adjuvant, wherein the polar solvent and the phosphate ester of the formula (A) are brought into contact; to use of the adjuvant for enhancing the activity of a pesticide; and to a non-therapeutic method of controlling phytopathogenic fungi and/or undesirable vegetation and/or undesired insect or mite attack and/or for regulating the growth of plants, wherein the composition is allowed to act on the respective pests, their environment or the crop plants to be protected from the respective pests, on the soil and/or on undesired plants and/or on the crop plants and/or on their environment. The present invention comprises combinations of preferred features with other preferred features.

Adjuvants and agrochemical formulations comprising phosphate esters are known:
WO 2007/115944 discloses an adjuvant for imidazolinone herbicides comprising phosphoric esters of monohydroxy-functional polyalkyl ethers. WO 2001/67860 discloses an agrotechnical formulation comprising a cyclohexanepolycarboxylic ester and accessory agents and/or
additives, such as phosphate esters of polyalkylene oxide ethers or dimethyl sulfoxide (DMSO). WO 2010/040835 discloses a liquid formulation comprising pyraclostrobin, organic solvent LM2 (such as DMSO) with a solubility in water of at least 2 g/l and an anionic surface-active substance OS1 (such as oligo-C₂-C₃-alkylene oxide C₈-C₂₂-alkyl ether phosphates).

RU 2071256 discloses a composition comprising lenacil, acidic phosphate esters of alkoxylated C₈/C₁₀-fatty alcohols and ethylene glycol which exhibits an improved activity of the herbicide.

The disadvantages of the known adjuvants and agrochemical formulations are, inter alia, that the activity-enhancing effect on pesticides is capable of improvement, that the activity-enhancing effect varies greatly, and that it is difficult to incorporate the adjuvants into agrochemical formulations (i.e. for example reduced storage stability may result).

It was an object of the present invention to provide an adjuvant and an agrochemical composition which overcome these disadvantages.

The object was achieved by an adjuvant for enhancing the activity of pesticides comprising a polar solvent and a phosphate ester of the formula (A) 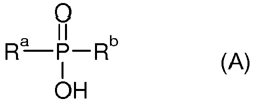 in which
- R^{a}: is R¹-O-(CₙH₂ₙO)ₓ-(CₘH₂ₘO)_{y}-,
- R^{b}: is R¹-O-(CₙH₂ₙO)ₓ-(CₘH₂ₘO)_{y}- or OH,
- R¹: is C₆-C₃₀-alkyl,
- n, m: independently of one another are a value of from 2 to 6,
- x, y: independently of one another are a value of from 0 to 100,
- x+y: gives a value of from 1 to 100, and
wherein the phosphate ester of the formula (A) can be present as the free acid and/or as a salt and wherein the polar solvent is dimethyl sulfoxide (DMSO) or tetramethylene sulfone.

**R^{b}** is preferably OH.

In an especially preferred form, the phosphate ester of the formula (A) can be a mixture in which in a portion T1 of the mixture R^{b} is OH and in the remaining portion T2 of the mixture R^{b} is R¹-O-(CₙH₂ₙO)ₓ-(CₘH₂ₘO)_{y}-. The mixture usually comprises from 0.5 to 50% by weight of T2, preferably from 1 to 20% by weight, and especially preferably from 1 to 10% by weight, the remainder of the mixture being T1.

**R¹** can be a linear or branched alkyl radical. R¹ is preferably an unsubstituted, alphatic alkyl radical. R¹ is preferably C₈-C₁₈-alkyl, especially preferably C₁₀-C₁₆-alkyl, such as decyl, undecyl, dodecyl, tridecyl, tetradecyl, pentadecyl or hexadecyl.

The indices **n and m** are preferably independently of one another a value from 2 to 5, especially preferably 2 to 4 and in particular 2 or 3. The indices n and m usually assume different values. The indices n and m usually assume values that are integers.

The indices **x and y** are preferably independently of one another a value from 0 to 40, especially preferably a value from 0 to 25 and in particular a value of from 1 to 20.

The **total of x+y** preferably gives a value from 3 to 50, especially preferably from 6 to 30 and in particular from 10 to 25.

In a preferred embodiment, n is 2, x is 3 to 30, m is 3, y is 0 to 20 and x+y is 4 to 30.

In the radical "R¹-O-(CₙH₂ₙO)ₓ-(CₘH₂ₘO)_{y}-", the alkoxy units "(CₙH₂ₙO)ₓ" and "(CₘH₂ₘO)_{y}" may occur in any order, for example randomly distributed or blockwise (such as A-B or A-B-A).

In a further preferred embodiment, R¹ is C₈-C₁₈-alkyl, n and m independently of one another are a value of from 2 to 4, x and y independently of one another are a value of from 1 to 25 and x+y give a value from 3 to 50.

In an especially preferred embodiment, R¹ is C₈-C₁₈-alkyl, n and m independently of one another are a value of 2 or 3, x and y independently of one another are a value of from 1 to 20 and x+y give a value from 6 to 30.

The phosphate ester of the formula (A) can be present as the free acid (such as R^{a}R^{b}P(O)OH) and/or as a **salt** (such as R^{a}R^{b}P(O)O- with counterion). In the salt form of the phosphate ester, it comprises a customary counterion, such as cations of alkali metals or alkaline-earth metals, ammonium, (2-hydroxyethyl)trimethylammonium, guanidinium, triethanolammonium, ethanolammonium, dimethylammonium or diglycol ammonium. The phosphate ester is preferably present as the free acid.

Phosphate esters of the formula (A) and their preparation are generally known, for example from Wasow, Surfactant Science Series, volume 56 (Anionic Surfactants: Organic Chemistry), 1995, chapter 10.2 (Polyoxyalkylene phosphate esters), pages 560-564.

The polar solvent which is best suitable is DMSO.

The adjuvant according to the invention usually comprises at least 5% by weight of **phosphate ester** of the formula (A), preferably at least 20% by weight and in particular at least 30% by weight. In another form the adjuvant according to the invention usually comprises at least 31% by weight of phosphate ester of the formula (A), preferably at least 33% by weight and in particular at least 35% by weight. The adjuvant can comprise no more than 90% by weight of the phosphate ester, preferably no more than 75% by weight and in particular no more than 50% by weight.

Dimethyl sulfoxide (DMSO) is a generally known organic solvent. The adjuvant according to the invention usually comprises at least 5% by weight of **polar solvent** (such as dimethyl sulfoxide), preferably at least 30% by weight, and in particular at least 50% by weight. In another form the adjuvant according to the invention usually comprises at least 60% by weight of polar solvent (such as dimethyl sulfoxide), preferably at least 62% by weight, and in particular at least 65% by weight. The adjuvant can comprise no more than 95% by weight of polar solvent (such as DMSO), preferably no more than 85% by weight and in particular no more than 75% by weight.

The **weight ratio** of polar solvent (such as DMSO) to phosphate ester of the formula (A) in the adjuvant is usually in the range of from 9.7:0.3 to 1:9, preferably from 9:1 to 3:7, especially preferably from 8.5:1.5 to 4:6 and in particular from 8:2 to 5:5.

The adjuvant can comprise further customary agrochemical accessory agents, such as further organic solvents or surfactants. Preferably, the adjuvant comprises at least one **anionic surfactant.** Suitable anionic surfactants are alkali, alkaline-earth or ammonium salts of sulfonates, sulfates, phosphates or carboxylates, with sulfonates being preferred. Examples of sulfonates are alkylarylsulfonates, diphenylsulfonates, alpha-olefinsulfonates, lignosulfonates, sulfonates of fatty acids and oils, sulfonates of ethoxylated alkylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates and carboxylated alcohol ethoxylates or alkylphenol ethoxylates.

The adjuvant according to the invention usually comprises at least 0.5% by weight **of anionic surfactants,** preferably at least 1 % by weight, and in particular at least 2% by weight. The adjuvant can comprise no more than 30% by weight of anionic surfactants, preferably no more than 15% by weight and in particular no more than 7% by weight.

The adjuvant according to the invention usually comprises no more than 20% by weight of **water,** preferably no more than 5% by weight and in particular no more than 1 % by weight of water.

The adjuvant according to the invention usually comprises no more than 5% by weight of **pesticide,** preferably no more than 1 % by weight and in particular no more than 0.1 % by weight. In a further preferred form, the adjuvant is free from pesticides, such as for example the pesticides described hereinbelow.

In a preferred embodiment, the adjuvant comprises from 20 to 75% by weight of phosphate ester of the formula (A), from 30 to 85% by weight of polar solvent (such as DMSO) and optionally from 1 to 15% by weight of anionic surfactant. In an especially preferred embodiment, the adjuvant comprises from 30 to 50% by weight of phosphate ester of the formula (A), from 50 to 75% by weight of polar solvent (such as DMSO) and optionally from 2 to 7% by weight of anionic surfactant.

The adjuvant according to the invention is usually a **liquid or a solid,** a liquid being preferred. Examples of solid formulations are those analogous to the solid formulations in WO 2007/028504 or WO 2007/028505. Preferred examples of solid types of agrochemical formulations are described hereinbelow under item "vi) water-dispersible granules (WG)" and "vii) water-dispersible powders (WP)". The adjuvant according to the invention is preferably a liquid, above all a solution, emulsion, suspension or suspoemulsion. The adjuvant is especially preferably a solution.

A further subject matter of the present invention is a process for the preparation of the adjuvant according to the invention, wherein the polar solvent and the phosphate ester of the formula (A) are brought into contact, for example by mixing the components in any order.

A further subject matter of the present invention is a **use** of the adjuvant according to the invention for enhancing the activity of a pesticide, above all of a herbicide. Suitable pesticides are described as hereinbelow.

A further subject matter of the present invention relates to an **agrochemical composition** comprising a pesticide and the adjuvant according to the invention.

The term **pesticide** refers to at least one active substance selected from the group of the fungicides, insecticides, nematicides, herbicides, safeners and/or growth regulators. Preferred pesticides are fungicides, insecticides, herbicides and growth regulators. Especially preferred pesticides are herbicides. Mixtures of pesticides from two or more of the abovementioned classes may also be used. The skilled worker is familiar with such pesticides, which can be found, for example, in Pesticide Manual, 15th Ed. (2009), The British Crop Protection Council, London. The following pesticides are suitable, by way of example (pesticides A) to K) are fungicides):
A) Respiration inhibitors
   - complex-III-inhibitors at the Qₒ-site (for example strobilurins): azoxystrobin, coumethoxystrobin, coumoxystrobin, dimoxystrobin, enestroburin, fenaminstrobin, fenoxy-strobin/flufenoxystrobin, fluoxastrobin, kresoxim-methyl, metominostrobin, orysastrobin, picoxystrobin, pyraclostrobin, pyrametostrobin, pyraoxystrobin, trifloxystrobin, methyl 2-[2-(2,5-dimethylphenyloxymethyl)phenyl]-3-methoxyacrylate, 2-(2-(3-(2,6-dichlorophenyl)-1-methylallylideneaminooxymethyl)phenyl)-2-methoxyimino-N-methylacetamide, pyribencarb, triclopyricarb/chlorodincarb, famoxadon, fenamidon;
   - complex-III-inhibitors at the Qᵢ-site: cyazofamid, amisulbrom;
   - complex-II-inhibitors (for example carboxamides): benodanil, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthio-biphenyl-2-yl)-3-difluoromethyl-1-methyl-1 H-pyrazole-4-carboxamide, N-(2-(1,3,3-trimethylbutyl)phenyl)-1,3-dimethyl-5-fluoro-1 H-pyrazole-4-carboxamide and N-[9-(dichloromethylene)-1,2,3,4-tetrahydro-1,4-methanonaphthalen-5-yl]-3-(difluoromethyl)-1-methyl-1 H-pyrazole-4-carboxamide;
   - other respiration inhibitors (for example complex I, uncouplers): diflumetorim; nitrophenyl derivatives: binapacryl, dinobuton, dinocap, fluazinam; ferimzone; organometal compounds: fentin salts such as fentin acetate, fentin chloride or fentine hydroxide; ametoctradin; and silthiofam;
B) Sterol biosynthesis inhibitors (SBI fungicides)
   - C14-Demethylase inhibitors (DMI fungicides): triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole; imidazoles: imazalil, pefurazoate, prochloraz, triflumizole; pyrimidines, pyridines and piperazines: fenarimol, nuarimol, pyrifenox, triforine;
   - delta14-reductase inhibitors: aldimorph, dodemorph, dodemorph acetate, fenpropimorph, tridemorph, fenpropidin, piperalin, spiroxamine;
   - 3-ketoreductase inhibitors: fenhexamid;
C) Nucleic acid synthesis inhibitors
   - phenylamides or acylamino acid fungicides: benalaxyl, benalaxyl-m, kiralaxyl, metalaxyl, metalaxyl-M (mefenoxam), ofurace, oxadixyl;
   - others: hymexazole, octhilinone, oxolinic acid, bupirimate;
D) Cell division and cytoskeleton inhibitors
   - tubulin inhibitors such as benzimidazoles, thiophanates: benomyl, carbendazim, fuberidazole, thiabendazole, thiophanate-methyl; triazolopyrimidines: 5-chloro-7-(4-methyl-piperidin-1-yl)-6-(2,4,6-trifluorophenyl)-[1,2,4]triazolo[1,5-a]pyrimidine;
   - further cell division inhibitors: diethofencarb, ethaboxam, pencycuron, fluopicolid, zoxamid, metrafenon, pyriofenon;
E) Amino acid synthesis and protein synthesis inhibitors
   - methionine synthesis inhibitors (anilinopyrimidines): cyprodinil, mepanipyrim, pyrimethanil;
   - protein synthesis inhibitors: blasticidin-S, kasugamycin, kasugamycin hydrochloride hydrate, mildiomycin, streptomycin, oxytetracyclin, polyoxin, validamycin A;
F) Signal transduction inhibitors
   - MAP/histidine kinase inhibitors: fluoroimide, iprodione, procymidone, vinclozolin, fenpiclonil, fludioxonil;
   - G-protein inhibitors: quinoxyfen;
G) Lipid and membrane synthesis inhibitors
   - phospholipid biosynthesis inhibitors: edifenphos, iprobenfos, pyrazophos, isoprothiolane;
   - lipid peroxidation: dicloran, quintozene, tecnazene, tolclofos-methyl, biphenyl, chloroneb, etridiazole;
   - phospholipid biosynthesis and cell wall attachment: dimethomorph, flumorph, mandipropamid, pyrimorph, benthiavalicarb, iprovalicarb, valifenalate and 4-fluorophenyl N-(1-(1-(4-cyanophenyl)ethanesulfonyl)but-2-yl)carbamate;
   - compounds which affect cell membrane permeability and fatty acids: propamocarb, propamocarb hydrochloride
H) "Multi-site" inhibitors
   - inorganic active substances: Bordeaux mixture, copper acetate, copper hydroxide, copper oxychloride, basic copper sulfate, sulfur;
   - thio- and dithiocarbamates: ferbam, mancozeb, maneb, metam, metiram, propineb, thiram, zineb, ziram;
   - organochlorine compounds (for example phthalimides, sulfamides, chloronitriles): anilazine, chlorothalonil, captafol, captan, folpet, dichlofluanid, dichlorophen, flusulfamide, hexachlorobenzene, pentachlorophenol and its salts, phthalid, tolylfluanid, N-(4-chloro-2-nitrophenyl)-N-ethyl-4-methylbenzenesulfonamide;
   - guanidines and others: guanidine, dodine, dodine-free base, guazatin, guazatin acetate, iminoctadin, iminoctadin triacetate, iminoctadin tris(albesilate), dithianon;
I) Cell wall biosynthesis inhibitors
   - glucan synthesis inhibitors: validamycin, polyoxin B; melanin synthesis inhibitors: pyroquilon, tricyclazole, carpropamid, dicyclomet, fenoxanil;
J) Resistance inductors
   - acibenzolar-S-methyl, probenazol, isotianil, tiadinil, prohexadione-calcium; phosphonates: fosetyl, fosetyl-aluminum, phosphorous acid and its salts;
K) Unknown mode of action
   - bronopol, quinomethionate, cyflufenamid, cymoxanil, dazomet, debacarb, diclomezin, difenzoquat, difenzoquat-methyl sulfate, diphenylamine, fenpyrazamine, flumetover, flusulfamid, flutianil, methasulfocarb, nitrapyrin, nitrothal-isopropyl, oxine-copper, proquinazid, tebufloquin, tecloftalam, triazoxide, 2-butoxy-6-iodo-3-propylchromene-4-one, N-(cyclopropylmethoxyimino-(6-difluoromethoxy-2,3-difluorophenyl)methyl)-2-phenyl-acetamide, N'-(4-(4-chloro-3-trifluoromethylphenoxy)-2,5-dimethylphenyl)-N-ethyl-N-methylformamidine, N'-(4-(4-fluoro-3-trifluoromethylphenoxy)-2,5-dimethylphenyl)-N-ethyl-N-methylformamidine, N'-(2-methyl-5-trifluoromethyl-4-(3-trimethylsilanylpropoxy)phenyl)-N-ethyl-N-methylformamidine, N'-(5-difluoromethyl-2-methyl-4-(3-trimethylsilanylpropoxy)-phenyl)-N-ethyl-N-methylformamidine, N-methyl-(1,2,3,4-tetrahydronaphthalen-1-yl)-2-{1-[2-(5-methyl-3-trifluoromethylpyrazol-1-yl)acetyl]piperidin-4-yl}thiazole-4-carboxylate, N-methyl-(R)-1,2,3,4-tetrahydronaphthalen-1-yl 2-{1-[2-(5-methyl-3-trifluoromethylpyrazol-1-yl)-acetyl]piperidin-4-yl}thiazole-4-carboxylate, 1-[4-[4-[5-(2,6-difluorophenyl)-4,5-dihydro-3-isoxazolyl]-2-thiazolyl]-1-piperidinyl]-2-[5-methyl-3-(trifluoromethyl)-1 H-pyrazol-1-yl]ethanone, 6-tert-butyl-8-fluoro-2,3-dimethylquinolin-4-yl methoxyacetate, *N*-methyl-2-{1-[(5-methyl-3-trifluoromethyl-1H-pyrazol-1-yl)acetyl]piperidin-4-yl}-*N*-[(1R)-1,2,3,4-tetrahydronaphthalen-1-yl]-4-thiazolecarboxamide, 3-[5-(4-methylphenyl)-2,3-dimethylisoxazolidin-3-yl]-pyridine, 3-[5-(4-chlorophenyl)-2,3-dimethylisoxazolidin-3-yl]-pyridine (pyrisoxazol), N-(6-methoxypyridin-3-yl) cyclopropanecarboxamide, 5-chloro-1-(4,6-dimethoxypyrimidin-2-yl)-2-methyl-1H-benzoimidazole, 2-(4-chlorophenyl)-N-[4-(3,4-dimethoxyphenyl)isoxazol-5-yl]-2-prop-2-ynyloxyacetamide;
M) Growth regulators
   - abscisic acid, amidochlor, ancymidole, 6-benzylaminopurine, brassinolide, butralin, chlormequat (chlormequat chloride), choline chloride, cyclanilid, daminozide, dikegulac, dimethipin, 2,6-dimethylpuridine, ethephon, flumetralin, flurprimidol, fluthiacet, forchlorfenuron, gibberellic acid, inabenfid, indole-3-acetic acid, maleic hydrazide, mefluidid, mepiquat (mepiquat chloride), metconazole, naphthaleneacetic acid, N-6-benzyladenine, paclobutrazole, prohexadione (prohexadione-calcium), prohydrojasmone, thidiazuron, triapenthenol, tributylphosphorotrithioate, 2,3,5-triiodobenzoic acid, trinexapac-ethyl and uniconazole;
N) **Herbicides**
   - acetamides: acetochlor, alachlor, butachlor, dimethachlor, dimethenamid, flufenacet, mefenacet, metolachlor, metazachlor, napropamid, naproanilid, pethoxamid, pretilachlor, propachlor, thenylchlor;
   - amino acid analogs: bilanafos, glyphosate, glufosinate, sulfosate;
   - aryloxyphenoxypropionates: clodinafop, cyhalofop-butyl, fenoxaprop, fluazifop, haloxyfop, metamifop, propaquizafop, quizalofop, quizalofop-P-tefuryl;
   - bipyridyls: diquat, paraquat;
   - carbamates and thiocarbamates: asulam, butylate, carbetamide, desmedipham, dimepiperat, eptam (EPTC), esprocarb, molinate, orbencarb, phenmedipham, prosulfocarb, pyributicarb, thiobencarb, triallate;
   - cyclohexanediones: butroxydim, clethodim, cycloxydim, profoxydim, sethoxydim, tepraloxydim, tralkoxydim;
   - dinitroanilines: benfluralin, ethalfluralin, oryzalin, pendimethalin, prodiamine, trifluralin;
   - diphenyl ethers: acifluorfen, aclonifen, bifenox, diclofop, ethoxyfen, fomesafen, lactofen, oxyfluorfen;
   - hydroxybenzonitriles: bromoxynil, dichlobenil, ioxynil;
   - imidazolinones: imazamethabenz, imazamox, imazapic, imazapyr, imazaquin, imazethapyr;
   - phenoxyacetic acids: clomeprop, 2,4-dichlorophenoxyacetic acid (2,4-D), 2,4-DB, dichlorprop, MCPA, MCPA-thioethyl, MCPB, mecoprop;
   - pyrazines: chloridazon, flufenpyr-ethyl, fluthiacet, norflurazon, pyridate;
   - pyridines: aminopyralid, clopyralid, diflufenican, dithiopyr, fluridone, fluroxypyr, picloram, picolinafen, thiazopyr;
   - sulfonylureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propylimidazo[1,2-b]pyridazin-3-yl)sulfonyl)-3-(4,6-dimethoxypyrimidin-2-yl)urea;
   - triazines: ametryne, atrazine, cyanazine, dimethametryne, ethiozine, hexazinone, metamitron, metribuzine, prometryne, simazine, terbuthylazine, terbutryne, triaziflam;
   - ureas: chlortoluron, daimuron, diuron, fluometuron, isoproturon, linuron, methabenzthiazuron, tebuthiuron;
   - other acetolactate synthase inhibitors: bispyribac-sodium, cloransulam-methyl, diclosulam, florasulam, flucarbazone, flumetsulam, metosulam, orthosulfamuron, penoxsulam, propoxycarbazone, pyribambenz-propyl, pyribenzoxim, pyriftalide, pyriminobac-methyl, pyrimisulfan, pyrithiobac, pyroxasulfon, pyroxsulam;
   - others: amicarbazone, aminotriazole, anilofos, beflubutamid, benazolin, bencarbazone, benfluresate, benzofenap, bentazone, benzobicyclon, bromacil, bromobutide, butafenacil, butamifos, cafenstrole, carfentrazone, cinidon-ethyyl, chlorthal, cinmethylin, clomazone, cumyluron, cyprosulfamid, dicamba, difenzoquat, diflufenzopyr, *Drechslera monoceras,* endothal, ethofumesate, etobenzanid, fentrazamide, flumiclorac-pentyl, flumioxazin, flupoxam, fluorochloridon, flurtamon, indanofan, isoxaben, isoxaflutol, lenacil, propanil, propyzamide, quinclorac, quinmerac, mesotrione, methylarsenic acid, naptalam, oxadiargyl, oxadiazone, oxaziclomefon, pentoxazone, pinoxaden, pyraclonil, pyraflufen-ethyl, pyrasulfotol, pyrazoxyfen, pyrazolynate, quinoclamin, saflufenacil, sulcotrione, sulfentrazone, terbacil, tefuryltrione, tembotrione, thiencarbazone, topramezone, 4-hydroxy-3-[2-(2-methoxyethoxy-methyl)-6-trifluoromethylpyridin-3-carbonyl]bicyclo[3.2.1]oct-3-en-2-one, ethyl (3-[2-chloro-4-fluoro-5-(3-methyl-2,6-dioxo-4-trifluoromethyl-3,6-dihydro-2H-pyrimidin-1-yl)phenoxy]pyridin-2-yloxy)acetate, methyl 6-amino-5-chloro-2-cyclopropylpyrimidine-4-carboxylate, 6-chloro-3-(2-cyclopropyl-6-methylphenoxy)pyridazin-4-ol, 4-amino-3-chloro-6-(4-chlorophenyl)-5-fluoropyridin-2-carboxylic acid, methyl 4-amino-3-chloro-6-(4-chloro-2-fluoro-3-methoxy-phenyl)pyridin-2-carboxylate and methyl 4-amino-3-chloro-6-(4-chloro-3-dimethylamino-2-fluorophenyl)pyridin-2-carboxylate;
O) Insecticides
   - organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
   - carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
   - pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin,
   - insect growth inhibitors: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazin; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramate;
   - nicotine receptor agonists/antagonists: clothianidin, dinotefuran, imidacloprid, thiamethoxam, nitenpyram, acetamiprid, thiacloprid, 1-(2-chlorothiazol-5-ylmethyl)-2-nitrimino-3,5-dimethyl-[1,3,5]triazinane;
   - GABA antagonists: endosulfan, ethiprole, fipronil, vaniliprole, pyrafluprole, pyriprole, N-5-amino-1-(2,6-dichloro-4-methylphenyl)-4-sulfinamoyl-1H-pyrazole-3-thiocarboxamide;
   - macrocyclic lactones: abamectin, emamectin, milbemectin, lepimectin, spinosad, spinetoram;
   - mitochondrial electron transport chain inhibitor (METI) I acaricides: fenazaquin, pyridaben, tebufenpyrad, tolfenpyrad, flufenerim;
   - METI II and III substances: acequinocyl, fluacyprim, hydramethylnone;
   - decouplers: chlorfenapyr;
   - inhibitors of oxidative phosphorylation: cyhexatin, diafenthiuron, fenbutatin oxide, propargite;
   - insect ecdysis inhibitors: cryomazine;
   - 'mixed function oxidase' inhibitors: piperonyl butoxide;
   - sodium channel blockers: indoxacarb, metaflumizone;
   - others: benclothiaz, bifenazate, cartap, flonicamid, pyridalyl, pymetrozin, sulfur, thiocyclam, flubendiamide, chlorantraniliprole, cyazypyr (HGW86); cyenopyrafen, flupyrazofos, cyflumetofen, amidoflumet, imicyafos, bistrifluron and pyrifluquinazone.

Preferred pesticides comprise at least one herbicide of the type N), especially preferably glyphosate, glufosinate, auxin herbicides, ALS inhibitor herbicides, bleacher herbicides or protoporphyrinogen-IX oxidase inhibitor herbicides. Very especially preferred pesticides comprise imidazolinones, such as imazamethabenz, imazamox, imazapic, imazapyr, imazaquin and imazethapyr.

The **pesticide** can be present in solid, dissolved, suspended, emulsified or suspoemulsified form. Preferably, at least one pesticide is present **in dissolved form.**

The pesticide can be water-soluble or water-insoluble. Preferably, at least one pesticide is **water-soluble.** Usually, water-soluble pesticides are soluble in water at 20°C to at least 0.2% by weight, preferably to at least 0.5% by weight, especially preferably to at least 2% by weight and in particular to at least 5% by weight.

The agrochemical composition can also comprise **fertilizers,** such as inorganic sulfates, inorganic phosphates or inorganic nitrates. Examples are ammonium sulfate, ammonium nitrate or ammonium phosphate. The agrochemical composition can also comprise micornutritiens, such as copper or zinc containg compounds.

The agrochemical composition according to the invention usually comprises at least 0.5% by weight of **pesticide** and preferably at least 1.0% by weight. The agrochemical composition can comprise no more than 99% by weight of pesticide, preferably no more than 80% by weight and in particular no more than 60% by weight.

The agrochemical composition according to the invention usually comprises at least 5% by weight of **phosphate ester** of the formula (A), preferably at least 20% by weight and in particular at least 30% by weight. In another form the agrochemical composition according to the invention usually comprises at least 31 % by weight of **phosphate ester** of the formula (A), preferably at least 35% by weight and in particular at least 40% by weight. The agrochemical composition can comprise no more than 90% by weight of the phosphate ester, preferably no more than 75% by weight and in particular no more than 50% by weight.

The agrochemical composition according to the invention usually comprises at least 5% by weight of polar solvent (such as **dimethyl sulfoxide**), preferably at least 30% by weight and in particular at least 50% by weight. In another form the agrochemical composition according to the invention usually comprises at least 60% by weight of polar solvent (such as dimethyl sulfoxide), preferably at least 65% by weight and in particular at least 70% by weight. The agrochemical composition can comprise no more than 95% by weight of polar solvent (such as DMSO), preferably no more than 85% by weight and in particular no more than 75% by weight.

The **weight ratio** of polar solvent (such as dimethyl sulfoxide) to phosphate ester of the formula (A) in the agrochemical composition is usually in the range of from 9.7:0.3 to 1:9, preferably from 9:1 to 3:7, especially preferably from 8.5:1.5 to 4:6 and in particular from 8:2 to 5:5.

The agrochemical composition according to the invention is usually a **liquid or a solid,** a liquid being preferred. Examples of solid formulations are those analogous to the solid formulations in WO 2007/028504 or WO 2007/028505. Preferred examples of solid types of agrochemical formulations are described hereinbelow under item "vi) water-dispersible granules (WG)" and "vii) water-dispersible powders (WP)". The agrochemical composition according to the invention is preferably a liquid, above all a solution, emulsion, suspension or suspoemulsion. The composition is especially preferably a solution.

The agrochemical compositions can furthermore also comprise **accessory agents** which are usually employed for plant protection products, the choice of the accessory agents depending on the specific use form or the active substance. Examples of suitable accessory agents are further solvents, solid carriers, surface-active substances (such as surfactants, solubilizers, protective colloids, wetters and adhesives), organic and inorganic thickeners, bactericides, antifreeze agents, antifoams, optionally colorants and stickers (for example for the treatment of seeds).

**Further solvents** which are suitable are water, organic solvents such as mineral oil fractions of medium to high boiling point, such as kerosene and diesel oil, furthermore coal tar oils and oils of vegetable or animal origin, aliphatic, cyclic and aromatic hydrocarbons, for example paraffins, tetrahydronaphthalene, alkylated naphthalenes and their derivatives, alkylated benzenes and their derivatives, alcohols such as methanol, ethanol, propanol, butanol and cyclohexanol, glycols, ketones such as cyclohexanone, gamma-butyrolactone, dimethyl fatty acid amides, fatty acids and fatty acid esters, and strongly polar solvents, for example amides, such as N-methylpyrrolidone. In principle, it is also possible to use solvent mixtures. Preferred further solvents are organic solvents.

The agrochemical composition according to the invention usually comprises no more than 20% by weight of **water,** preferably no more than 5% by weight and in particular no more than 1 % by weight of water.

Solid **carriers** are mineral earths such as silicas, silica gels, silicates, precipitated silicas (for example Sipernat types such as Sipernat 50 S), talc, kaolin, limestone, lime, chalk, bole, loess, clay, dolomite, diatomaceous earths, calcium sulfate, magnesium sulfate, magnesium oxide, ground synthetic materials, fertilizers such as ammonium sulfate, ammonium phosphate, ammonium nitrate, ureas and products of vegetable origin such as cereal meal, tree bark meal, wood meal and nutshell meal, cellulose powders or other solid carriers.

Suitable **surface-active substances** (adjuvants, wetters, adhesives, dispersants or emulsifiers) are the alkali, alkaline-earth, ammonium salts of aromatic sulfonic acids, for example of lignosulfonic acid (Borresperse^{®} types, Borregaard, Norway), phenolsulfonic acid, naphthalenesulfonic acid (Morwet^{®} types, Akzo Nobel, USA) and dibutylnaphthalenesulfonic acid (Nekal^{®} types, BASF, Germany), and of fatty acids, alkyl- and alkylarylsulfonates, alkyl sulfates, lauryl ether sulfates and fatty alcohol sulfates, and salts of sulfated hexa-, hepta- and octadecanols and of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl-or nonylphenol, alkylphenyl polyglycol ethers, tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignin sulfite waste liquors and proteins, denatured proteins, polysaccharides (for example methylcellulose), hydrophobic-modified starches, polyvinyl alcohol (Mowiol^{®} types, Clariant, Switzerland), polycarboxylates (Sokalan^{®} types, BASF, Germany), polyalkoxylates, polyvinylamine (Lupamin^{®} types, BASF, Germany), polyethyleneimine (Lupasol^{®} types, BASF, Germany), polyvinylpyrrolidone and their copolymers.

**Surfactants** which are suitable are, in particular, anionic, cationic, nonionic and amphoteric surfactants, block polymers and polyelectrolytes. Suitable **anionic** surfactants are as mentioned hereinabove.

Suitable **nonionic** surfactants are alkoxylates, N-alkylated fatty acid amides, amine oxides, esters or sugar-based surfactants. Examples of alkoxylates are compounds such as alcohols, alkylphenols, amines, amides, arylphenols, fatty acids or fatty acid esters which have been alkoxylated. Substances which can be employed for the alkoxylation are ethylene oxide and/or propylene oxide, preferably ethylene oxide. Examples of N-alkylated fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, saccharose esters and glucose esters, or alkyl polyglucosides.

Suitable **cationic** surfactants are quaternary surfactants, for example quaternary ammonium compounds having one or two hydrophobic groups, or salts of long-chain primary amines. Suitable **amphoteric** surfactants are alkylbetaines and imidazolines. Suitable **block polymers** are block polymers of the A-B or the A-B-A type comprising blocks of polyethylene oxide and polypropylene oxide, or of the A-B-C type comprising alkanol, polyethylene oxide and polypropylene oxide. Suitable **polyelectrolytes** are polyacids or polybases. Examples of polyacids are alkali metal salts of polyacrylic acid. Examples of polybases are polyvinylamines or polyethyleneamines.

The agrochemical composition preferably comprises at least one **anionic surfactant.** The agrochemical composition usually comprises at least 0.5% by weight of anionic surfactants, preferably at least 1 % by weight and in particular at least 2% by weight. The composition can comprise no more than 30% by weight of anionic surfactants, preferably no more than 15% by weight and in particular no more than 7% by weight.

The agrochemical composition especially preferably comprises at least one **anionic surfactant and** at least one **nonionic surfactant.** The agrochemical composition usually comprises at least 3% by weight of nonionic surfactants, preferably at least 10% by weight and in particular at least 20% by weight. The composition can comprise no more than 50% by weight of nonionic surfactants, preferably no more than 40% by weight and in particular no more than 30% by weight. Suitable anionic and nonionic surfactants are mentioned hereinabove.

Examples of **thickeners** (i.e. compounds which impart a modified flow behavior to the composition, i.e. high viscosity at rest and low viscosity in the agitated state) are polysaccharides and organic and inorganic layer minerals such as xanthan gum (Kelzan^{®}, CP Kelco, USA), Rhodopol^{®} 23 (Rhodia, France) or Veegum^{®} (R.T. Vanderbilt, USA) or Attaclay^{®} (Engelhard Corp., NJ, USA).

**Bactericides** may be added to stabilize the composition. Examples of bactericides are those based on diclorophene and benzyl alcohol hemiformal (Proxel^{®} from ICI or Acticide^{®} RS from Thor Chemie and Kathon^{®} MK from Rohm & Haas) and also isothiazolinone derivatives such as alkylisothiazolinones and benzisothiazolinones (Acticide^{®} MBS from Thor Chemie).

Examples of suitable **antifreeze agents** are ethylene glycol, propylene glycol, urea and glycerol.

Examples of **antifoams** are silicone emulsions (such as, for example, Silikon^{®} SRE, Wacker, Germany or Rhodorsil^{®}, Rhodia, France), long-chain alcohols, fatty acids, salts of fatty acids, organofluorine compounds and their mixtures.

Examples of **colorants** are both pigments, which are sparingly soluble in water, and dyes, which are soluble in water. Examples which may be mentioned are the dyes and pigments known by the names Rhodamin B, C. I. Pigment Red 112 and C. I. Solvent Red 1, Pigment Blue 15:4, Pigment Blue 15:3, Pigment Blue 15:2, Pigment Blue 15:1, Pigment Blue 80, Pigment Yellow 1, Pigment Yellow 13, Pigment Red 48:2, Pigment Red 48:1, Pigment Red 57:1, Pigment Red 53:1, Pigment Orange 43, Pigment Orange 34, Pigment Orange 5, Pigment Green 36, Pigment Green 7, Pigment White 6, Pigment Brown 25, Basic Violet 10, Basic Violet 49, Acid Red 51, Acid Red 52, Acid Red 14, Acid Blue 9, Acid Yellow 23, Basic Red 10, Basic Red 108.

Examples of **stickers** are polyvinylpyrrolidone, polyvinyl acetate, polyvinyl alcohol and cellulose ether (Tylose^{®}, Shin-Etsu, Japan).

Examples of types of compositions are suspensions (SC, OD, FS), emulsifiable concentrates (EC), emulsions (EW, EO, ES), pastes, pills, wettable powders or dusts (WP, SP, SS, WS, DP, DS) or granules (GR, FG, GG, MG), which can either be soluble or dispersible (wettable) in water, and gels for the treatment of plant propagation materials such as seed (GF). The agrochemical compositions are prepared in the known manner (for example Mollet, H. and Grubemann, A.: Formulation technology (Wiley VCH Verlag, Weinheim, 2001).

Examples of **types of agrochemical formulations** are:
1. Types of compositions for dilution in water
   i) Water-soluble concentrates (SL, LS)
      10 parts by weight of a water-soluble active substance are dissolved in 80 parts by weight of the adjuvant according to the invention and treated with 10% of a wetting agent. This gives a composition with an active substance content of 10% by weight.
   ii) Dispersible concentrates (DC)
      20 parts by weight of the adjuvant according to the invention and optionally of a pesticide are dissolved in 70 parts by weight of cyclohexanone with addition of 10 parts by weight of a dispersant, for example polyvinylpyrrolidone. Upon dilution in water, a dispersion is obtained. The active substance content is 20% by weight.
   iii) Emulsifiable concentrates (EC)
      15 parts by weight of the adjuvant according to the invention and optionally of a pesticide are dissolved in 75 parts by weight of xylene with addition of calcium dodecylbenzenesulfonate and castor oil ethoxylate (in each case 5 parts by weight). Upon dilution in water, an emulsion is obtained. The composition has an active substance content of 15% by weight.
   iv) Emulsions (EW, EO, ES)
      25 parts by weight of the adjuvant according to the invention and optionally of a pesticide are dissolved in 35 parts by weight of xylene with addition of calcium dodecylbenzenesulfonate and castor oil ethoxylate (in each case 5 parts by weight). Using an emulsifier apparatus (for example Ultra-Turrax), this mixture is placed into 30 parts by weight of water and made into a homogeneous emulsion. Upon dilution in water, an emulsion is obtained. The composition has an active substance content of 25% by weight.
   v) Suspensions (SC, OD, FS)
      20 parts by weight of the adjuvant according to the invention and optionally of a pesticide are comminuted in a stirred ball mill, with addition of 10 parts by weight of dispersants and wetters and 70 parts by weight of water or an organic solvent, to give a fine active substance suspension. Upon dilution in water, a stable suspension of the active substance is obtained. The active substance content in the composition is 20% by weight.
   vi) Water-dispersible granules (WG)
      50 parts by weight of an absorbate of the adjuvant according to the invention on an absorptive carrier (for example Sipernat 50 S) are ground finely, with addition of 50 parts by weight of carriers, dispersants and wetters, and prepared as water-dispersible or water-soluble granules by means of technical apparatuses (for example extrusion, spray tower, fluidized bed). Upon dilution in water, a stable dispersion or solution of the active substance results.
   vii) Water-dispersible powders (WP)
      50 parts by weight of an absorbate of the adjuvant according to the invention on an absorptive carrier (for example Sipernat 50 S) are ground, with addition of 25 parts by weight of carriers, dispersants, wetters and silica gel, in a rotor-stator mill. Upon dilution in water, a stable dispersion or solution of the active substance results.
   viii) Gels (GF)
      In a ball mill, 20 parts by weight of the active substances, 10 parts by weight of dispersant, 1 part by weight of gelling agent and 70 parts by weight of water or of an organic solvent are ground to a fine suspension. Upon dilution with water, a stable suspension with an active substance content of 20% by weight is obtained.
2. Types of compositions for direct application
   ix) Dusts (DP, DS)
      5 parts by weight of an absorbate of the adjuvant according to the invention and of a pesticide on an absorptive carrier (for example Sipernat® 50 S) are ground finely and mixed intimately with 95 parts by weight of finely divided kaolin. This gives dust for direct application.
   x) Granules (GR, FG, GG, MG)
      0.5 part by weight of an absorbate of the adjuvant according to the invention and of a pesticide on an absorptive carrier (for example Sipernat® 50 S) are ground finely and combined with 99.5 parts by weight of carriers. Current methods in this context are extrusion, spray drying or the fluidized bed. This gives granules for direct application with an active substance content of 0.5% by weight.
   xi) ULV solutions (UL)
      10 parts by weight of an absorbate of the adjuvant according to the invention and of a pesticide on an absorptive carrier (for example Sipernat® 50 S) are dissolved in 90 parts by weight of an organic solvent, for example xylene. This gives a composition for direct application with an active substance content of 10% by weight.

The present invention furthermore relates to a process for the preparation of the agrochemical composition according to the invention, wherein the pesticide, polar solvent (such as dimethyl sulfoxide) and the phosphate ester of the formula (A) are brought into contact, for example by mixing the components in any order.

To treat plant propagation materials, in particular **seed,** one will generally use water-soluble concentrates (LS), suspensions (FS), dusts (DS), water-dispersible and water-soluble powders (WS, SS), emulsions (ES), emulsifiable concentrates (EC) and gels (GF). These compositions can be applied to the propagation materials, in particular seed, in undiluted or, preferably, diluted form. In this context, the composition in question can be diluted 2- to 10-fold, so that from 0.01 to 60% by weight, preferably from 0.1 to 40% by weight, of active substance are present in the compositions to be used for the seed-dressing mixture. They can be used before or during sowing. The treatment of plant propagation material, in particular the treatment of seed, is known to a person skilled in the art and is carried out by dusting, coating, pelleting, dipping or immersing the plant propagation material, the treatment preferably being carried out by pelleting, coating or dusting or by the in-furrow treatment, so that for example premature germination of the seed is prevented.
To treat seed, it is preferred to use suspensions. Such compositions usually comprise from 1 to 800 g/l active substance, from 1 to 200 g/l surfactants, from 0 to 200 g/l antifreeze agents, from 0 to 400 g/l binders, from 0 to 200 g/l colorants and solvents, preferably water.

The **application rates** for use in plant protection are between 0.001 and 2.0 kg of active substance per ha, preferably between 0.005 and 2 kg per ha, especially preferably between 0.05 and 0.9 kg per ha, in particular between 0.1 and 0.75 kg per ha, depending on the nature of the desired effect. When treating plant propagation materials, for example seed, amounts of active substance of from 0.1 to 1000 g/100 kg of propagation material or seed, preferably from 1 to 1000 g/100 kg, especially preferably from 1 to 100 g/100 kg, in particular from 5 to 100 g/100 kg, will generally be used. When used in the protection of materials or stored products, the application rate of active substance depends on the nature of the field of application and of the desired effect. Conventional application rates in the protection of materials are, for example, from 0.001 g to 2 kg, preferably from 0.005 g to 1 kg, of active substance per cubic meter of treated material.

Substances which may be admixed to the agrochemical compositions are various types of oils, wetters, herbicides, bactericides, other pesticides and/or fertilizers (such as, for example, ammonium nitrate/urea solution UAN, ammonium sulfate AMS), optionally also only just before use **(tank mix**). These agents can be admixed to the compositions according to the invention in the weight ratio 1:100 to 100:1, preferably 1:10 to 10:1.

The **adjuvant** according to the invention can be admixed to the compositions according to the invention in the **weight ratio** 1:100 to 100:1, preferably 1:10 to 10:1.

The present invention furthermore relates to a non-therapeutic **method of controlling** phytopathogenic fungi and/or undesirable vegetation and/or undesired insect or mite attack and/or for regulating the growth of plants, wherein the agrochemical composition according to the invention is allowed to act on the respective pests, their environment or the crop plants to be protected from the respective pests, on the soil and/or on undesired plants and/or on the crop plants and/or on their environment. The term crop plants also includes those plants which have been modified by breeding, mutagenesis or recombinant methods, including the biotechnological agricultural products which are on the market or in the process of being developed. Genetically modified plants are plants whose genetic material has been modified in a manner which does not occur under natural conditions by hybridizing, mutations or natural recombination (i.e. recombination of the genetic material). Here, one or more genes will, as a rule, be integrated into the genetic material of the plant in order to improve the plant's properties. Such genetic modifications also comprise posttranslational modifications of proteins, oligo- or polypeptides, for example by means of glycosylation or binding polymers such as, for example, prenylated, acetylated or farnelysated residues or PEG residues.

**Advantages** of the present invention are, inter alia, a pronounced activity-enhancing effect on pesticides, the fact that the activity-enhancing effect is within very narrow limits and a simple possibility of incorporating the adjuvants into agrochemical formulations. The adjuvant can be incorporated very simply not only into aqueous, but also into nonaqueous agrochemical formulations, it is very well tolerated by crop plants, it has a high tank mix compatibility, the containers and equipment which have been in contact with the adjuvant can be cleaned in a simple manner (for example using water), the adjuvant can even be used as a cleaning agent for the spray apparatus used, it has low toxicity and it is readily degradable in the environment.

The examples which follow illustrate the invention without imposing any limitation.

### Examples

Surfactant A: Anionic surfactant, pH 6-7 (5% in water), surface tension approximately 29 mN/m (0.1 % in water).

Surfactant B: Nonionic surfactant, water-soluble, pH 5-7 (1% in water), HLB value 15-17. Phosphate ester 1: Klearfac® AA270, phosphate ester (free acid form) of a polyalkoxylated fatty alcohol, liquid, approximately 13% by weight of water, approximately 10% by weight of phosphoric acid, acid number 200-220 mg KOH/g, dynamic viscosity 2.2025 mPas at 25°C, pH (1% in water) 2.2, surface tension (25°C, 0.1% aqueous solution) 28.1 dynes/cm, commercially available from BASF Corporation, USA.

### Example 1 - Preparation of the adjuvant

350 g of phosphate ester 1 and 35 g of surfactant A were dissolved in dimethyl sulfoxide (DMSO) with stirring at room temperature and the solution made up to 1.0 I. The solution was ready for use and storage-stable.

### Example 2 - Preparation of an agrochemical formulation

The following components were stirred into most of the DMSO at room temperature and subsequently made up to 1.0 I with DMSO: 27 g/l imazamox, 266 g/l surfactant B, 333 g/l phosphate ester 1 and 33 g/l surfactant A. This gave a clear solution of a ready-to-use SL formulation (water-soluble concentrate).

### Example 3 - Preparation of an agrochemical formulatio

The following components were stirred into most of the DMSO at room temperature and subsequently made up to 1.0 I with DMSO: 25 g/l imazamox, 250 g/l surfactant B, 300 g/l phosphate ester 1 and 25 g/l surfactant A. This gave a clear solution of a ready-to-use SL formulation (water-soluble concentrate).

### Example 4 - Preparation of tank mix with cycloxydim

A) A sprayable tank mix (application rate 250 I/ha) is prepared by mixing a wettable powder formulation (WP) containing 10 wt% cycloxydim with water. An adjuvant containing phosphate ester 1 and DMSO in a weight ratio of 1 : 1,6 or 1,25:1 is prepared and added to the tank mix. The application rates of cycloxydim are 12,5, 25, 50 and 100 g/ha. The application rates of DMSO and phosphate ester 1 are 250 and 400 g/ha, or 500 and 400 g/ha.

### Example 5 - Preparation of tank mix with acifluorfen-sodium

A) A sprayable tank mix (application rate 250 I/ha) is prepared by mixing an aqeuous soluble concentrate formulation (SL) containing 100 g/l acifluorfen-sodium with water. An adjuvant containing phosphate ester 1 and DMSO in a weight ratio of 1 : 1,6 or 1,25:1 is prepared and added to the tank mix. The application rates of the herbicide are 37,5, 75, 150 and 300 g/ha. The application rates of DMSO and phosphate ester 1 are 250 and 400 g/ha, or 500 and 400 g/ha.

### Example 6 - Preparation of tank mix with formesafen-sodium

A) A sprayable tank mix (application rate 250 I/ha) is prepared by mixing an aqeuous soluble concentrate formulation (SL) containing 100 g/l formesafen-sodium with water. An adjuvant containing phosphate ester 1 and DMSO in a weight ratio of 1 : 1,6 or 1,25:1 is prepared and added to the tank mix. The application rates of the herbicide are 35, 70, 140 and 280 g/ha. The application rates of DMSO and phosphate ester 1 are 250 and 400 g/ha, or 500 and 400 g/ha.

### Example 7 - Preparation of tank mix with bentazone-sodium

A) A sprayable tank mix (application rate 250 I/ha) is prepared by mixing an aqeuous soluble concentrate formulation (SL) containing 100 g/l bentazone-sodium with water. An adjuvant containing phosphate ester 1 and DMSO in a weight ratio of 1 : 1,6 or 1,25:1 is prepared and added to the tank mix. The application rates of the herbicide are 105, 210, 420 and 840 g/ha. The application rates of DMSO and phosphate ester 1 are 250 and 400 g/ha, or 500 and 400 g/ha.

### Example 8 - Preparation of tank mix with topramezone

A) A sprayable tank mix (application rate 250 I/ha) is prepared by mixing a wettable powder formulation (WP) containing 10 wt% topramezon with water. An adjuvant containing phosphate ester 1 and DMSO in a weight ratio of 1 : 1,6 or 1,25:1 is prepared and added to the tank mix. The application rates of the herbicide are 6,25, 12,5, 25 and 50 g/ha. The application rates of the DMSO and phosphate ester 1 are 250 and 400 g/ha, or 500 and 400 g/ha.

### Example 9 - Biological activity

The biological activity was evaluated against *Chenopodium album* at the growth stage 12-18, which were grown in a field trial. The plants were treated with an use rate of 32 and 40 g imazamox/ha of the SL formulation of Example 3 and the efficacy was evaluated 60 days after treatment.

The herbicidal activity was evaluated by awarding scores to the treated plants in comparison to the untreated control plants. The evaluation scale ranges from 0% to 100% activity. 100% activity means the complete death at least of those parts of the plant that are above ground. Conversely, 0% activity means that there were no differences between treated and untreated plants. The results in Table 1 demonstrated the increased activity of the active substance as a result of addition of the adjuvant.

A comparative control, "Control A" contained Pulsar® 40 from BASF SE (SL formulation containing 40 g/l imazamox) and Dash® from BASF SE (a liquid adjuvant).

**Table 1: Activity [%]**

| | Rate (g/ha) | Activity [%] |
|---|---|---|
| Control A | 32 | 82 |
| Example 3 | 32 | 98 |
| Control A | 40 | 85 |
| Example 3 | 40 | 99 |

### Example 10 - Biological activity

The biological activity was evaluated against Ambrosia elatior, Polygonum convolvulus, Datura spp., Xanthium sp., Mercurialis annua, and Portulaca oleracea at the growth stage 12-18, which were grown in greenhouse. The plants were treated with an use rate of 32 and 40 g imazamox/ha of the SL formulation of Example 3 and the efficacy was evaluated 60 days after treatment. The herbicidal activity was evaluated as in Example 9 and the average activity was calculated from all plants (Table 2).

**Table 2: Activity [%]**

| | Rate (g/ha) | Activity [%] |
|---|---|---|
| Control A | 32 | 70 |
| Example 3 | 32 | 95 |
| Control A | 40 | 77 |
| Example 3 | 40 | 95 |

### Example 11 - Biological activity

The biological activity was evaluated against Digitaria sanguinalis, Echinochloa crus-galli, Setaria viridis, and Setaria verticillata at the growth stage 12-18, which were grown in greenhouse. The plants were treated with an use rate of 32 and 40 g imazamox/ha of the SL formulation of Example 3 and the efficacy was evaluated 60 days after treatment. The herbicidal activity was evaluated as in Example 9 and the average activity was calculated from all plants (Table 3).

**Table 3: Activity [%]**

| | Rate (g/ha) | Activity [%] |
|---|---|---|
| Example 3 | 32 | 85 |
| Example 3 | 40 | 97 |

### Example 12 - Storage stability

Agrochemical compositions were prepared by mixing 25 g/l imazamox, the adjuvants A to E, and water to yield a SL formulation. The stability of the agrochemical compositions was tested visual inspection. Sample A formed a clear solution ("YES"), whereas imazamox did not dissolve in samples B to E ("NO"), as summarized in Table 4. Only when the Samples A to E were diluted with water to prepare an aqueous tank mix with a concentration of 1 wt% imazamox all tankmixes formed solutions.

As comparative adjuvants Soprophor® DSS15 (an ammonium salt of an ethoxylated polyarylphenol sulphate, CAS 59891-11-1, water-soluble) or Sorpophor® 4D384 (an ammonium salt of an polyarylphenylether sulphate, water-soluble) were used (both available from Rhodia, USA).

**Table 4:**

| | A | B | C | D | E |
|---|---|---|---|---|---|
| Phosphate ester 1 [g] | 300 | 300 | 300 | - | - |
| Sorpophor® DSS15 [g] | - | - | - | 300 | - |
| Sorpophor® 4D384 [g] | - | - | - | - | 300 |
| DMSO [ml] | 400 | - | - | 400 | 400 |
| Ethylene glycol [ml] | - | - | 400 | - | - |
| Water [ml] | - | 400 | - | - | - |
| Stability | YES | NO | NO | NO | NO |

## Claims

1. An adjuvant for enhancing the activity of pesticides comprising a polar solvent and a phosphate ester of the formula (A) 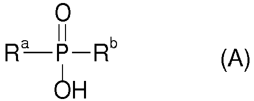 in which
R^{a} is R¹-O-(CₙH₂ₙO)ₓ-(CₘH₂ₘO)_{y}-,
R^{b} is R¹-O-(CₙH₂ₙO)ₓ-(CₘH₂ₘO)_{y}- or OH,
R¹ is C₆-C₃₀-alkyl,
n, m independently of one another are a value of from 2 to 6,
x, y independently of one another are a value of from 0 to 100,
x+y gives a value of from 1 to 100, and
wherein the phosphate ester of the formula (A) can be present as the free acid and/or as a salt and wherein the polar solvent is dimethyl sulfoxide or tetramethylene sulfone.

2. The adjuvant according to claim 1, wherein R¹ is C₈-C₁₈-alkyl.

3. The adjuvant according to claim 1 or 2, wherein n and m independently of one another are a value of 2 or 3.

4. The adjuvant according to any of claims 1 to 3, which comprises at least 20% by weight of phosphate ester of the formula (A).

5. The adjuvant according to any of claims 1 to 4, which comprises at least 20% by weight of polar solvent.

6. The adjuvant according to any of claims 1 to 5, wherein the weight ratio of the polar solvent to phosphate ester of the formula (A) is in the range of from 9.7:0.3 to 1:9.

7. The adjuvant according to any of claims 1 to 6, comprising an anionic surfactant.

8. The adjuvant according to any of claims 1 to 7, comprising no more than 20% by weight of water.

9. The adjuvant according to any of claims 1 to 8, wherein the polar solvent comprises dimethylsulfoxide.

10. An agrochemical composition comprising a pesticide and the adjuvant according to any of claims 1 to 9.

11. The composition according to claim 10, wherein the pesticide is present in dissolved form.

12. The composition according to claim 10 or 11, comprising at least 20% by weight of phosphate ester of the formula (A).

13. The composition according to any of claims 10 to 12, comprising at least 20% by weight of polar solvent.

14. The composition according to any of claims 10 to 13, comprising no more than 20% by weight of water.

15. The composition according to any of claims 10 to 14, comprising a nonionic surfactant.

16. The composition according to any of claims 10 to 14 wherein the pesticide comprises an imidazolinone, preferably selected from imazamethabenz, imazamox, imazapic, imazapyr, imazaquin and imazethapyr.

17. A process for the preparation of the adjuvant according to any of claims 1 to 9, wherein the polar solvent and the phosphate ester of the formula (A) are brought into contact.

18. The use of the adjuvant according to any of claims 1 to 9 for enhancing the activity of a pesticide.

19. A non-therapeutic method of controlling phytopathogenic fungi and/or undesirable vegetation and/or undesired insect or mite attack and/or for regulating the growth of plants, wherein the
composition according to any of claims 10 to 14 is allowed to act on the respective pests, their environment or the crop plants to be protected from the respective pests, on the soil and/or on undesired plants and/or on the crop plants and/or on their environment.

## Patentansprüche

1. Adjuvans zur Steigerung der Wirksamkeit von Pestiziden, enthaltend ein polares Lösungsmittel und einen Phosphatester der Formel (A) 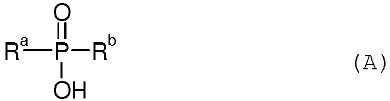 worin
R^{a} für R¹-O-(CₙH₂ₙO)ₓ-(CₘH₂ₘO)_{y}- steht,
R^{b} für R¹-O-(CₙH₂ₙO)ₓ-(CₘH₂ₘO)_{y}- oder OH steht,
R¹ für C₆-C₃₀-Alkyl steht,
n, m unabhängig voneinander für einen Wert von 2 bis 6 stehen,
x, y unabhängig voneinander für einen Wert von 0 bis 100 stehen,
x+y einen Wert von 1 bis 100 ergibt, und
wobei der Phosphatester der Formel (A) als freie Säure und/oder als Salz vorliegen kann, und wobei das polare Lösungsmittel Dimethylsulfoxid oder Tetramethylensulfon ist.

2. Adjuvans nach Anspruch 1, wobei R¹ für C₈-C₁₈-Alkyl steht.

3. Adjuvans nach Anspruch 1 oder 2, wobei n und m unabhängig voneinander für einen Wert von 2 oder 3 stehen.

4. Adjuvans nach einem der Ansprüche 1 bis 3, enthaltend mindestens 20 Ges.-% Phosphatester der Formel (A).

5. Adjuvans nach einem der Ansprüche 1 bis 4, enthaltend mindestens 20 Gew.-% polares Lösungsmittel.

6. Adjuvans nach einem der Ansprüche 1 bis 5, wobei das Gewichtsverhältnis des polaren Lösungsmittels zu Phosphatester der Formel (A) im Bereich von 9,7 : 0,3 bis 1 : 9 liegt.

7. Adjuvans nach einem der Ansprüche 1 bis 6, enthaltend ein anionisches Tensid.

8. Adjuvans nach einem der Ansprüche 1 bis 7, enthaltend höchstens 20 Gew.-% Wasser.

9. Adjuvans nach einem der Ansprüche 1 bis 8, wobei das polare Lösungsmittel Dimethylsulfoxid umfasst.

10. Agrochemische Zusammensetzung enthaltend ein Pestizid und das Adjuvans gemäß einem der Ansprüche 1 bis 9.

11. Zusammensetzung nach Anspruch 10, wobei das Pestizid in gelöster Form vorliegt.

12. Zusammensetzung nach Anspruch 10 oder 11, enthaltend mindestens 20 Gew.-% Phosphatester der Formel (A).

13. Zusammensetzung nach einem der Ansprüche 10 bis 12, enthaltend mindestens 20 Ges.-% polares Lösungsmittel.

14. Zusammensetzung nach einem der Ansprüche 10 bis 13, enthaltend höchstens 20 Gew.-% Wasser.

15. Zusammensetzung nach einem der Ansprüche 10 bis 14, enthaltend ein nichtionisches Tensid.

16. Zusammensetzung nach einem der Ansprüche 10 bis 14, wobei das Pestizid ein Imidazolinon umfasst, das vorzugsweise aus Imazamethabenz, Imazamox, Imazapic, Imazapyr, Imazaquin und Imazethapyr ausgewählt ist.

17. Verfahren zur Herstellung des Adjuvans gemäß einem der Ansprüche 1 bis 9, wobei man das polare Lösungsmittel und den Phosphatester der Formel (A) in Kontakt bringt.

18. Verwendung des Adjuvans gemäß einem der Ansprüche 1 bis 9 zur Steigerung der Wirksamkeit eines Pestizids.

19. Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung gemäß einem der Ansprüche 10 bis 14 auf die jeweiligen Schädlinge, deren Lebensraum oder die vor dem jeweiligen Schädling zu schützenden Kulturpflanzen, den Boden und/oder auf unerwünschte Pflanzen und/oder die Kulturpflanzen und/oder deren Lebensraum einwirken lässt.

## Revendications

1. Adjuvant destiné à améliorer l'activité de pesticides, comprenant un solvant polaire et un ester de phosphate de formule (A) 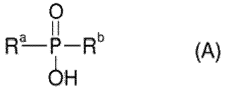 dans laquelle
R^{a} est R¹-O-(CₙH₂ₙO)ₓ-(CₘH₂ₘO)_{y}-,
R^{b} est R¹-O-(CₙH₂ₙO)ₓ-(CₘH₂ₘO)_{y}- ou OH,
R¹ est C₆-C₃₀-alkyle,
n, m, possèdent indépendamment l'un de l'autre une valeur allant de 2 à 6,
x, y, possèdent indépendamment l'un de l'autre une valeur allant de 0 à 100,
x+y donne une valeur allant de 1 à 100, et
où l'ester de phosphate de formule (A) peut être présent sous forme d'acide libre et/ou sous forme de sel et où le solvant polaire est le diméthylsulfoxyde ou la sulfone de tétraméthylène.

2. Adjuvant selon la revendication 1, dans lequel R¹ est C₈-C₁₈-alkyle.

3. Adjuvant selon la revendication 1 ou 2, dans lequel n et m possèdent indépendamment l'un de l'autre une valeur de 2 ou 3.

4. Adjuvant selon l'une quelconque des revendications 1 à 3, comprenant au moins 20% en poids d'ester de phosphate de formule (A).

5. Adjuvant selon l'une quelconque des revendications 1 à 4, comprenant au moins 20% en poids de solvant polaire.

6. Adjuvant selon l'une quelconque des revendications 1 à 5, dans lequel le rapport pondéral du solvant polaire à l'ester de phosphate de formule (A) se trouve dans la plage allant de 9,7:0,3 à 1:9.

7. Adjuvant selon l'une quelconque des revendications 1 à 6, comprenant un agent tensioactif anionique.

8. Adjuvant selon l'une quelconque des revendications 1 à 7, comprenant au plus 20% en poids d'eau.

9. Adjuvant selon l'une quelconque des revendications 1 à 8, dans lequel le solvant polaire comprend du diméthylsulfoxyde.

10. Composition agrochimique comprenant un pesticide et l'adjuvant selon l'une quelconque des revendications 1 à 9.

11. Composition selon la revendication 10, dans laquelle le pesticide est présent sous forme dissoute.

12. Composition selon la revendication 10 ou 11, comprenant au moins 20% en poids d'ester de phosphate de formule (A).

13. Composition selon l'une quelconque des revendications 10 à 12, comprenant au moins 20% en poids de solvant polaire.

14. Composition selon l'une quelconque des revendications 10 à 13, comprenant au plus 20% en poids d'eau.

15. Composition selon l'une quelconque des revendications 10 à 14, comprenant un agent tensioactif non ionique.

16. Composition selon l'une quelconque des revendications 10 à 14, dans laquelle le pesticide comprend une imidazolinone, choisie de préférence parmi l'imazaméthabenz, l'imazamox, l'imazapic, l'imazapyr, l'imazaquin et l'imazéthapyr.

17. Procédé de préparation de l'adjuvant selon l'une quelconque des revendications 1 à 9, dans lequel le solvant polaire et l'ester de phosphate de formule (A) sont mis en contact.

18. Utilisation de l'adjuvant selon l'une quelconque des revendications 1 à 9, afin d'améliorer l'activité d'un pesticide.

19. Méthode non thérapeutique de contrôle de champignons phytopathogènes et/ou de végétation indésirable et/ou d'une attaque indésirable par des insectes ou des acariens et/ou de régulation de la croissance de plantes, dans laquelle on permet à la composition selon l'une quelconque des revendications 10 à 14 d'agir sur les nuisibles respectifs, leur environnement ou les plantes de culture à protéger contre les nuisibles respectifs, sur le sol et/ou sur les plantes indésirables et/ou sur les plantes de culture et/ou sur leur environnement.
